# EUROPÄISCHE PATENTSCHRIFT

(11) **EP 0 989 052 B1**
(45) Veröffentlichungstag und Bekanntmachung des Hinweises auf die Patenterteilung: **10.12.2003**
(21) Anmeldenummer: 99115202.6
(22) Anmeldetag: 31.07.1999
(51) Int. Cl.: B62D 25/08, B62D 23/00

(54) **Aussteifung für eine selbsttragende Karosserie eines Kraftwagens**
Reinforcement for an integral body and frame of a vehicle
Renforcement pour carosserie auto-porteuse d'un véhicule

(30) Priorität: 19.09.1998 DE 19843024
(43) Veröffentlichungstag der Anmeldung: 29.03.2000
(73) Patentinhaber: DaimlerChrysler AG, 70567 Stuttgart (DE)
(72) Erfinder: Röhl, Wolfgang, 71069 Sindelfingen (DE); Sikorski, Jörg, 70199 Stuttgart (DE)

(56) Entgegenhaltungen:
- DE-C1- 4 445 327
- JP-A- 9 240 510
- JP-A- 10 007 026
- US-A- 5 350 214

## Beschreibung

Die Erfindung betrifft eine Aussteifung für eine selbsttragende Karosserie eines Kraftwagens der im Oberbegriff des Patentanspruchs 1 angegebenen Art.

Eine solche Aussteifung ist aus der DE 14 55 679 C2 bekannt und betrifft eine Endeinheit als Baugruppe für selbsttragende Wagenkasten von Kraftfahrzeugen. Die Endeinheit ist als Frontbereich eines Kraftfahrzeugs mit aufrechten Seitenwänden ausgebildet, die mit jeweils einer Einbuchtung für Räder versehenen sind. Im Bereich dieser Einbuchtungen ist in jede Seitenwand ein hutförmiger Dom eingesetzt, der mit Hilfe von Flanschen mit der jeweiligen Seitenwand im Bereich der Radhäuser verbunden ist. Der hutförmige Dom dient zur Befestigung beispielsweise eines Stoßdämpfers.

Etwa auf Höhe des unteren Endes der Frontscheibe ist ein am oberen Ende einer in Fahrzeugquerrichtung verlaufenden Trennwand angeordneter Querträger vorgesehen, der in einer zwischen den Radhäusern liegenden Fahrzeugquerebene angeordnet ist und die beiden vorderen Fahrwerksdome in deren oberem Bereich fest miteinander verbindet. Zusätzlich ist der Querträger an seinen beiden Enden jeweils über ein Preßteil mit den Seitenwänden fest verbunden. Der Querträger ist an den Preßteilen mit Hilfe eines sich in Richtung der Seitenwände nach außen erweiternden Knotenblechs befestigt, das eine räumliche Abstützung der Fahrzeugdome bewirkt. In einem Abstand hinter der Trennwand ist eine den Fahrgastraum nach vorne begrenzende Abtrennung vorgesehen, die zwischen den Seitenwänden befestigt ist und gemeinsam mit der Trennwand und den Seitenwänden eine kastenartige Versteifung bildet.

Da im Bereich auf Höhe der Fahrzeugbordwand lediglich der Querträger zur Versteifung der Rohbaustruktur vorgesehen ist, ergibt sich für den Karosserierohbau insbesondere von großen Kraftwagen mit langem Radstand allerdings nur eine bedingte Steifigkeit, insbesondere Torsionssteifigkeit.

Aus der DE 44 45 327 C1 ist eine gattungsähnliche Versteifungsstruktur im Bereich einer die Fahrgastzelle vom Kofferraum eines Kraftwagens trennenden Rückwand vorgesehen. Diese Struktur umfasst einen sich über die Fahrzeugbreite erstreckenden und an hinteren Radkästen hochgezogenen Hohlprofilrahmen mit einem oberen Querträger, über den die Versteifungsstruktur fest mit einer Hutablage verbunden ist. Der an der Unterseite und am vorderen Ende der Hutablage angeordnete Querträger ist in einem Abstand oberhalb der Radläufe an den Seitenwänden des Kraftwagens befestigt und als oberer Teil der Versteifungsstruktur im Bereich der Trennwand vorgesehen, so dass dessen Lage in nachteiliger Weise maßgeblich durch die Anordnung und Neigung der Trennwand bestimmt ist. Eine im Abstand zu der Trennwand verlaufende Abtrennung, die gemeinsam mit den Seitenwänden und der Trennwand eine kastenartige Versteifung bildet und bei größeren Kraftwagen mit längerem Radstand erst für eine ausreichende Verwindungsaussteifung sorgt, ist nicht vorgesehen.

Aufgabe der Erfindung ist es, eine Aussteifung für eine selbsttragende Karosserie eines Kraftwagens der im Oberbegriff des Patentanspruchs 1 angegebenen Art zu schaffen, bei der die Steifigkeit des Karosserierohbaus insbesondere im Bereich der kastenartigen Versteifung verbessert ist.

Diese Aufgabe wird erfindungsgemäß durch eine Aussteifung für eine selbsttragende Karosserie eines Kraftwagens mit den Merkmalen des Patentanspruchs 1 gelöst.

Bei der Aussteifung nach der Erfindung ist die Querstrebe im Überdeckungsbereich gemeinsam mit einer Tragplatte einer Hutablage an hinteren Radhäusern angeordnet und versteifend mit der Tragplatte verbunden. Durch die Anordnung sowohl der Tragplatte als auch der Querstrebe an den Radläufen, ergibt sich eine besonders stabile Aussteifung, die sehr gut zur Aufnahme von Verwindungskräften geeignet ist und insbesondere die Torsionssteifigkeit der selbsttragenden Karosserie deutlich verbessert. In vorteilhafter Weise verbessert die Querstrebe zudem die Beulsteifigkeit der Tragplatte und verhindert ein Schwingen oder ein Durchbiegen der Tragplatte insbesondere in Fahrzeughochrichtung. Die Tragplatte ist insbesondere zur Aufnahme von Kräften in Fahrzeuglängsrichtung geeignet, so daß sich insgesamt eine Aussteifung ergibt, die den Verwindungskräften entgegenwirkt.

Vorteilhafte Ausführungsformen der erfindungsgemäßen Aussteifung mit zweckmäßigen Weiterbildungen der Erfindung sind in Ansprüchen 2 bis 12 angegeben.

So hat es sich als besonders günstig erwiesen, die Querstrebe mit einem einseitig offenen Profil zu fertigen, das mit der Tragplatte zu einem zumindest abschnittsweise geschlossenen Profil verbindbar ist. Somit ist die Zugstrebe z.B. auf einfache Weise aus einem Stahlblech umformbar und anschließend zumindest abschnittsweise mit der Tragplatte verbindbar. Wird die Querstrebe über größere Abschnitte oder über deren gesamte Länge mit der Tragplatte verbunden, kann die Durchbiegung der Tragplatte in Fahrzeughochrichtung deutlich reduziert werden.

Ist den Radhäusern in ihren oberen Bereichen jeweils ein Dämpferdom zugeordnet, so kann die Querstrebe an den Dämpferdomen festgelegt werden. Die durch das Fahrwerk auf die Dämpferdome übertragenen Kräfte können durch die Querstrebe und die Tragplatte besonders gut aufgenommen werden, wodurch besonders günstige Torsionssteifigkeitseigenschaften des gesamten Rohbaus erzielt werden können.

Durchdringen die Dämpferdome die Tragplatte, so kann eine besonders stabile Verbindung zwischen den Dämpferdomen und der Tragplatte geschaffen werden, wobei die an der Oberseite der Tragplatte angeordnete Querstrebe zusätzlich eine großräumige Krafteinleitung aus den Dämpferdomen in die Querstrebe ermöglicht.

Die Stützschuhe an den Enden der Querstrebe ergeben einen großen Krafteinleitungsknoten zwischen den Dämpferdomen und der Querstrebe. Dieser Knoten kann durch zusätzlich an der Unterseite der Tragplatte angeordnete Winkelversteifungen noch vergrößert werden, die ebenfalls mit den Dämpferdomen verbunden sind.

Sind in der Tragplatte von den Domöffnungen nach seitlich außen verlaufende Ausnehmungen vorgesehen, so kann bei der Montage die Tragplatte nach den bereits angebrachten Dämpferdomen und Seitenstreben montiert werden, bevor anschließend die Querstrebe und die Winkelversteifungen befestigt werden.

Schließlich hat es sich als besonders günstig gezeigt, die Tragplatte mit mittragenden vorderen und hinteren Trägerprofilen zu begrenzen, um dadurch die Tragplatte zu versteifen und insbesondere der Durchbiegung und Schwingung in Fahrzeughochrichtung entgegenzuwirken.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine perspektivische Ansicht des Hecks einer selbsttragenden Karosserie mit einer erfindungsgemäßen Aussteifung;
- Fig. 2: eine perspektivische Ansicht einer Querstrebe im Bereich eines Dämpferdomes mit einer zugeordneten Winkelversteifung und Seitenstrebe der erfindungsgemäßen Aussteifung nach einer bevorzugten Ausführungsform;
- Fig. 3: eine Explosionsdarstellung einer Tragplatte mit einer Querstrebe und einer vorderen Trennwand der erfindungsgemäßen Aussteifung nach einer bevorzugten Ausführungsform.

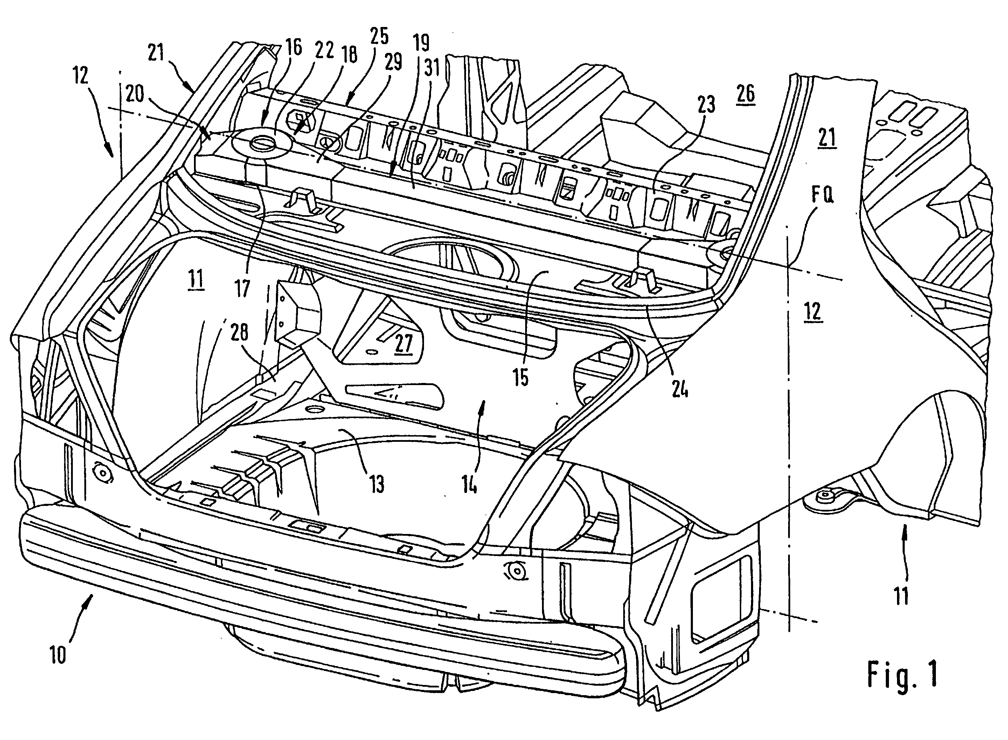

Fig.1 zeigt eine perspektivische Ansicht des Hecks einer selbsttragenden Karosserie mit einem Heckraum 10, der seitlich von mit Radhäusern 11 versehenen Seitenwänden 12, unten von einem Heckraumboden 13 und vorne von einer Abtrennung 14 begrenzt ist. In dessen vorderem Bereich ist der Heckraumboden 10 nach oben von einer Tragplatte 15 einer Hutablage begrenzt, die etwas unterhalb des unteren Endes einer nicht dargestellten Fahrzeugheckscheibe etwa horizontal verläuft und aus einem umgeformten Stahlblech besteht. Die seitlich liegenden Radhäuser 11 umfassen in ihrem oberen Bereich kegelstumpfförmige bzw. annähernd zylindrische Dämpferdome 16, die zur Aufnahme von Fahrwerksdämpfungsgliedern dienen. Die Tragplatte 15 ist im Bereich von Domöffnungen 17 in oberen Enden 18 der Dämpferdome 16 durchsetzt, die mit der Tragplatte 15 fest verbunden sind.

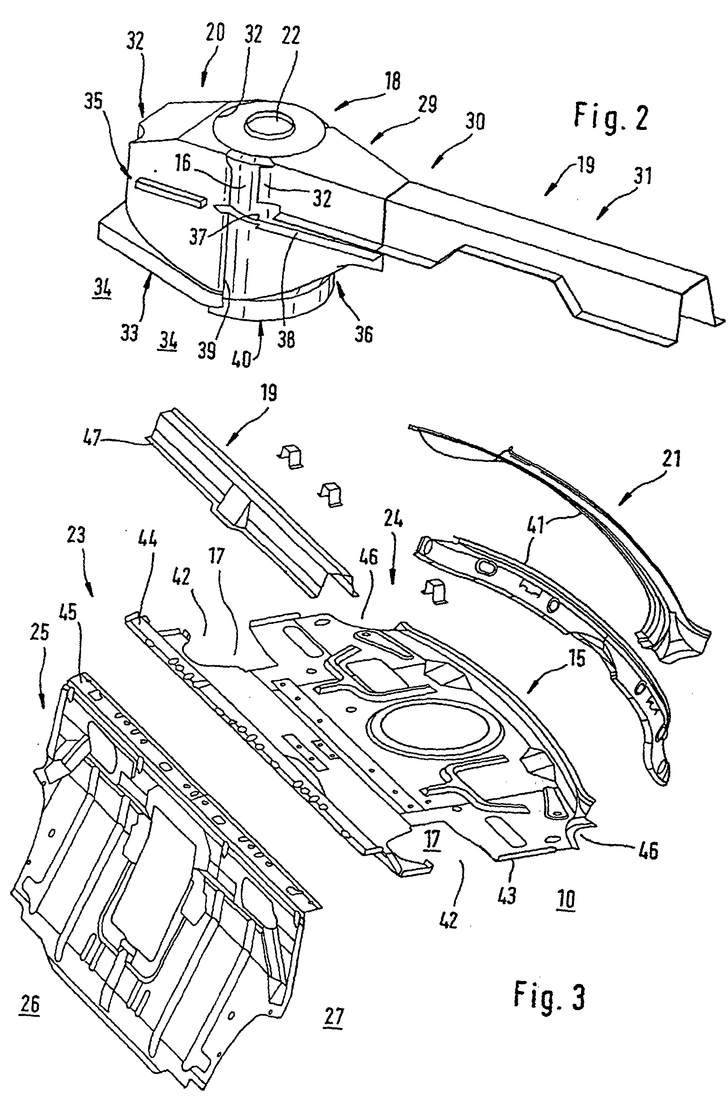

Zwischen den oberen Enden der Dämpferdome 16 ist eine Querstrebe 19 angeordnet, die im Überdeckungsbereich mit der Tragplatte 15 an deren Oberseite und an den Dämpferdomen 16 befestigt ist. Sowohl die Dämpferdome 16 als auch die Querstrebe 19 liegen in einer annähernd vertikalen Fahrzeugquerebene FQ, wobei die Tragplatte 15 annähernd rechtwinklig zu dieser Fahrzeugquerebene FQ verläuft. Die Oberseite der Querstrebe 19 und eine obere Stirnseite 22 der Dämpferdome 16 verlaufen in einer Ebene, die sich vorzugsweise etwa auf Höhe des unteren Endes der Heckscheibe erstreckt. Die Querstrebe 19 ist durch zwei Seitenstreben 20 bis zu den Seitenwänden 12 der selbsttragenden Karosserie im Bereich von C-Säulen 21 verlängert. Auf die Ausgestaltung und Befestigung der Seitenstreben 20 wird insbesondere unter Bezugnahme von Fig.2 noch intensiver eingegangen.

Die Tragplatte 15 ist von einem mittragenden vorderen und hinteren Trägerprofil 23,24 begrenzt, die ebenfalls an den Seitenwänden 12 der selbsttragenden Karosserie im Bereich der C-Säulen 21 befestigt sind. Das hintere Trägerprofil 24 bildet das untere Ende der Heckscheibe und den Übergangsbereich zwischen Heckscheibe und einem ebenfalls nicht dargestellten Heckraumdeckel bzw. Kofferraumdeckel. Das vordere Trägerprofil 24 bildet das obere Ende einer vorderen Trennwand 25, die einen Fahrgastraum 26 nach hinten begrenzt, sich in Fahrzeugquerrichtung und in einer aufrechten Lage erstreckt und neben dem vorderen Trägerprofil 21 der Tragplatte 15 auch an den Seitenwänden 12 und an einem nicht gezeigten Fahrgastraumboden befestigt ist. Zusammen mit der Abtrennung 14, den Seitenwänden 12 und der Tragplatte 15 begrenzt die vordere Trennwand 25 einen Aufnahmeraum 27, der hier zur Aufnahme eines nicht gezeigten Kraftstoffbehälters dient. Den Eckbereich zwischen den Radhäusern 11 und dem Heckraumboden 13 bildet jeweils ein sich in Fahrzeuglängsrichtung erstreckender Längsträger 28.

Die in den Seitenwänden 12 angeordneten Radhäuser 11 mit den zugehörigen Dämpferdomen 16 und der Heckraumboden 14 bilden mit der Tragplatte 15 und der an ihr und den Dämpferdomen 16 befestigte Querstrebe 17 insgesamt ein kastenförmiges Gebilde der selbsttragenden Karosserie, wobei insbesondere die Tragplatte 15 und die Querstrebe 17 die Torsionsfestigkeit der Karosserie erhöhen. Auf die Beschreibung der besonderen Wirkungsweise und Ausgestaltung der Querstrebe 19 und der Tragplatte 15 wird unter Bezugnahme auf Fig. 2 und 3 noch näher eingegangen.

In Fig.2 ist die Querstrebe 19 im Bereich eines der Dämpferdome 16 gezeigt, wobei die Tragplatte 15 in dieser Darstellung weggelassen ist, um die Anordnung der Seitenstrebe 20 an dem Dämpferdom 16 und eine der Querstrebe 19 zugeordnete Winkelversteifung 29 erkennbar darzustellen. Um eine besonders gute Versteifungswirkung zu erzielen, ist die Querstrebe 19 gegenüber dem Dämpferdom 16 um ein geringes Maß in Fahrzeuglängsrichtung nach hinten versetzt. Die Querstrebe 19 ist an ihren den Dämpferdomen 16 zugewandten Enden durch Stützschuhe 29 erweitert, die zum Ausgleich von Längentoleranzen im Bereich eines Schweißabschnittes 30 insbesondere durch eine Punktschweißverbindung an einem Mittelabschnitt 31 der Querstrebe 19 befestigt sind. Der Stützschuh 29 ist vorzugsweise aus einem Stahlblech umgeformt und erweitert sich ausgehend von dem Mittelabschnitt 31 im wesentlichen pyramidenstumpfförmig in Richtung des Dämpferdomes 16, wobei der Stützschuh 29 im Kontaktbereich dem Dämpferdom 16 angepaßt ist und Laschen 32 aufweist, die eine großflächige Anlage und Befestigung des Stützschuhs 29 an dem Dämpferdom 16 ermöglichen. Durch diese großflächige Anlage des Stützschuhs 29 mit dem gegenüber dem Mittelabschnitt 31 erweiterten Profil, wird insgesamt eine großräumige Anbindung der Querstrebe 16 an den Dämpferdom 16 zur Krafteinleitung geschaffen.

Die zwischen der jeweiligen Seitenwand 12 und dem zugeordneten Dämpferdom 16 angeordnete Seitenstrebe 20 ist ausgehend von der Seitenwand und der C-Säule 21 in Richtung gegen den Dämpferdom 16 ebenfalls im wesentlichen pyramidenstumpfförmig erweitert und in einem großflächigen Anlagebereich 32 sowohl an der Seitenwand 12 und der C-Säule 21 als auch an dem Dämpferdom 16 durch Schweißverbindungen, insbesondere Punktschweißverbindungen, befestigt. Außerdem ist die jeweilige Seitenstrebe 20 mit einem unteren Anlagebereich 33 an einem oberen Bereich 34 des zugeordneten Radhauses 11 insbesondere durch Punktschweißen festgelegt. Auf Höhe der Unterseite der hier nicht gezeigten Tragplatte 15 sind an der Seitenstrebe 20 Konsolen 35 angeordnet, die zur Auflage der im Bereich der Seitenstreben 20 ausgeschnittenen Tragplatte 15 dienen, wobei die Tragplatte 15 an den Konsolen 35 der Seitenstreben 20 durch Punktschweißen festgelegt werden kann.

Der Querstrebe 19 ist pro Dämpferdom 16 jeweils eine Winkelversteifung 36 zugeordnet, die durch die Tragplatte 15 von der Querstrebe 19 getrennt ist. Die Winkelversteifung 36 ist an einem oberen Winkelabschnitt 37 mit Hilfe von Laschen 38 an der Tragplatte 15 und an dem Dämpferdom 16 mittels eines seitlichen Winkelabschnitts 39 vorzugsweise durch Punktschweißen befestigt. Zusätzlich liegt die Winkelversteifung 36 mit einem unteren Winkelabschnitt 40 an dem oberen Bereich 34 des zugeordneten Radhauses 11 befestigt auf.

Fig.3 zeigt eine Explosionsdarstellung der Tragplatte 15 mit der Querstrebe 19, der vorderen Trennwand 25 und einem Trägerprofil 41 der C-Säule 21. In der Tragplatte 15 sind von den Domöffnungen 17 nach seitlich außen verlaufende Ausnehmungen 42 erkennbar, die den Seitenstreben 20 angepaßt sind. Seitlich an der Tragplatte 15 sind Seitenlaschen 43 vorgesehen, mit denen die Tragplatte 15 zusätzlich an der zugehörigen Seitenwand 12 befestigt werden kann. Das die Tragplatte 15 nach vorne begrenzende und verstärkende vordere Trägerprofil 23 wird mit der vorderen Trennwand 25 entlang von Stoßflächen 44,45 mittels Punktschweißen verbunden. Im hinteren Bereich der Tragplatte 15 sind in Verlängerung des hinteren Trägerprofils 24 hintere Ausnehmungen 46 eingebracht, die zur Aufnahme und Festlegung der Trägerprofile 41 der C-Säule 21 an der Tragplatte 15 dienen.

Die aus einem Stahlblech umgeformte Querstrebe 19 - von der in Fig.3 lediglich der Mittelabschnitt 31 ersichtlich ist - weist ein einseitig offenes, U-förmiges Profil mit daran angeformten Querstrebenlaschen 47 auf, das mit der Tragplatte 15 zu einem zumindest abschnittsweise geschlossenen Profil verbindbar ist. Dazu wird die Querstrebe 19 mit den Querstrebenlaschen 47 an der Tragplatte 15 mittels Punktschweißen festgelegt.

Als im Rahmen der Erfindung mitumfaßt ist es zu betrachten, daß die Querstrebe 19 und die Stützschuhe 29 aus einem Teil gefertigt werden. Gleichfalls wäre es denkbar, die Querstrebe 19 und die Seitenstreben 20 einteilig zu gestalten, wobei sich dann die Querstrebe 19 über die gesamte Breite des Fahrzeuges zwischen den beiden Seitenwänden 12 erstreckt.

Außerdem ist es als von der Erfindung mitumfaßt zu betrachten, daß anstelle der Schweißverbindungen - insbesondere Punktschweißverbindungen - auch andere Verbindungen wie Schraubverbindungen verwendbar sind, um die betreffenden Karosserieteile zusammenzufügen.

## Patentansprüche

1. Aussteifung für eine selbsttragende Karosserie eines Kraftwagens, die in einer zwischen seitlichen Radhäusern (11) liegenden Fahrzeugquerebene (FQ) angeordnet ist;
mit einer die Radhäuser (11) im oberen Bereich (34) miteinander verbindenden Querstrebe (19), die mit ihren Enden an jeweils einem im oberen Bereich (34) des zugeordneten Radhauses (11) vorgesehenen Dämpferdom (16) festgelegt ist;
mit einer sich zwischen Seitenwänden (12) des Kraftwagens in Fahrzeugquerrichtung erstreckenden Trennwand (25) ;
und mit einer im Abstand zu der Trennwand (25) verlaufenden Abtrennung (14), die mit den Seitenwänden (12) und der Trennwand (25) eine weiter versteifende Struktur bildet,
**dadurch gekennzeichnet,**
**dass** die Querstrebe (19) im Überdeckungsbereich mit einer Tragplatte (15) einer Hutablage an hinteren Radhäusern (11) angeordnet und versteifend mit der Tragplatte (15) verbunden ist, und
**dass** die Querstrebe (19) im Abstand hinter der den Fahrgastraum (26) nach hinten begrenzenden Trennwand (25) angeordnet ist.

2. Aussteifung nach Anspruch 1,
**dadurch gekennzeichnet,**
**dass** die Querstrebe (19) ein einseitig offenes Profil aufweist, das mit der Tragplatte (15) zu einem zumindest abschnittsweise geschlossenen Profil verbunden ist.

3. Aussteifung nach Anspruch 1,
**dadurch gekennzeichnet,**
**dass** die Tragplatte (15) im Bereich von Domöffnungen (17) von den Dämpferdomen (16) durchsetzt ist und dass die Querstrebe (19) an der Oberseite der Tragplatte (15) angeordnet ist.

4. Aussteifung nach Anspruch 1,
**dadurch gekennzeichnet,**
**dass** die Oberseite der Querstrebe (19) und der Dämpferdome (16) in einer Ebene liegen, die vorzugsweise etwa auf Höhe des unteren Endes einer Fahrzeugheckscheibe verläuft.

5. Aussteifung nach Anspruch 1,
**dadurch gekennzeichnet,**
**dass** die Querstrebe (19) an ihren dem Dämpferdom (16) zugewandten Enden durch Stützschuhe (29) erweitert ist.

6. Aussteifung nach Anspruch 1,
**dadurch gekennzeichnet,**
**dass** den Enden der Querstrebe (19) zwei durch die Tragplatte (15) getrennte untere Winkelversteifungen (36) zugeordnet sind, die mit der Tragplatte (15) und jeweils einem der Radhäuser (11) bzw. Dämpferdome (16) fest verbunden sind.

7. Aussteifung nach Anspruch 1,
**dadurch gekennzeichnet,**
**dass** die Querstrebe (19) durch zwei Seitenstreben (20) bis zu den Seitenwänden (12) verlängert ist, welche zwischen der jeweiligen Seitenwand (12) und dem zugeordneten Radhaus (11) bzw. Dämpferdom (16) befestigt sind.

8. Aussteifung nach Anspruch 7,
**dadurch gekennzeichnet,**
**dass** das Profil der Seitenstreben (20) an ihren dem Dämpferdom (16) zugewandten Ende erweitert ist.

9. Aussteifung nach Anspruch 7,
**dadurch gekennzeichnet,**
**dass** die Tragplatte (15) von Domöffnungen (17) nach seitlich außen verlaufende Ausnehmungen (42) aufweist, die den Seitenstreben (20) angepaßt sind.

10. Aussteifung nach Anspruch 9,
**dadurch gekennzeichnet,**
**dass** die Seitenstreben (20) im Bereich der Ausnehmungen (42) Konsolen (35) zum Verbinden der Tragplatte (15) mit den Seitenstreben (20) aufweisen.

11. Aussteifung nach Anspruch 1,
**dadurch gekennzeichnet,**
**dass** die Dämpferdome (16) zumindest im Bereich ihres oberen Endes (18) annähernd kegelstumpfförmig oder zylindrisch ausgebildet sind.

12. Aussteifung nach Anspruch 1,
**dadurch gekennzeichnet,**
**dass** die Tragplatte (15) von einem mittragenden vorderen und hinteren Trägerprofil (23,24) begrenzt ist.

## Claims

1. A reinforcing section for a unitised body of a motor vehicle which is positioned in a transverse plane (FQ) of the vehicle lying between lateral wheel housings (11);
having a cross strut (19) which connects the wheel housings (11) in the upper area (34) the upper ends of which are connected to a damper tower (16) provided in the upper area (34) of the corresponding wheel housing (11),
having a bulkhead (25) which extends lengthways along the vehicle between side panels (12) of the motor vehicle;
and having a separation (14) which runs a certain distance from the bulkhead (25) and which forms a further reinforcing structure with the side panels (12) and the bulkhead (25),
**characterised in that**
the cross strut (19) is positioned in the overlapping area with a base plate (15) of a rear shelf at the rear wheel housings (11) and connected to the base plate (15) in such way as to create a reinforcement, and
the cross strut (19) is positioned a certain distance behind the bulkhead (25) which delimits the passenger compartment (26) to the rear.

2. A reinforcing section in accordance with claim 1,
**characterised in that**
the cross strut (19) has a profile which is open on one side and which is connected to the base plate (15) to form an at least partially closed profile.

3. A reinforcing section in accordance with claim 1,
**characterised in that**
the damper towers (16) pass through the base plate (15) in the area of the tower openings (17) and the cross strut (19) is positioned on the top of the base plate ( 15).

4. A reinforcing section in accordance with claim 1,
**characterised in that**
the top of the cross strut (19) and the damper towers (16) lie in a plane which preferably runs at approximately the height of the lower end of a rear windscreen of the vehicle.

5. A reinforcing section in accordance with claim 1,
**characterised in that**
the ends of the cross strut (19) facing the damper tower (16) are widened by supporting shoes (29).

6. A reinforcing section in accordance with claim 1,
**characterised in that**
positioned at the ends of the cross strut (19) are two lower angled reinforcing sections (36) which are divided by the base plate (15) and connected rigidly to one of the wheel housings (11) or damper towers (16).

7. A reinforcing section in accordance with claim 1,
**characterised in that**
the cross strut (19) is extended as far as the side panels (12) by two side struts (20) which are fixed between the side panels (12) and the corresponding wheel housings (11) or damper towers (16).

8. A reinforcing section in accordance with claim 7,
**characterised in that**
the profile of the side struts (20) is widened at the ends facing the damper towers (16).

9. A reinforcing section in accordance with claim 7,
**characterised in that**
the base plate (15) has recesses running laterally outwards from tower openings (17) which are matched to the side struts (20).

10. A reinforcing section in accordance with claim 9,
**characterised in that**
the side struts (20) have brackets (35) in the area of the recesses (42) to join the base plate (15) to the side struts (20).

11. A reinforcing section in accordance with claim 1,
**characterised in that**
the damper towers (16) are designed at least in the area of their upper ends (18) approximately in the form of truncated cones or cylinders.

12. A reinforcing section in accordance with claim 1,
**characterised in that**
the base plate (15) is delimited by jointly load-bearing front and rear profiled members (23, 24).

## Revendications

1. Renforcement pour une carrosserie autoporteuse d'un véhicule automobile disposé en un plan transversal de véhicule (FQ) figurant entre des passages de roue (11) latéraux ; comportant une entretoise transversale de châssis (19) reliant entre eux les passages de roue (11) au niveau de la zone supérieure (34), qui, par ses extrémités, est immobilisée en un point de fixation d'amortisseur (16) chaque fois prévu dans la zone supérieure (34) du passage de roue (11) respectif ; comportant une paroi de séparation (25) s'étendant transversalement à la direction du véhicule entre les deux parois latérales (12) du véhicule automobile ; et comportant une séparation (14) s'étendant à distance de la paroi de séparation (25), qui, avec les parois latérales (12) et la paroi de séparation (25) forme une autre structure de rigidification, **caractérisé en ce que** l'entretoise transversale de châssis (19) dans la zone de recouvrement avec une plaque porteuse (15) d'une plage arrière est disposée sur des passages de roue (11) arrières et reliée avec la plaque porteuse (15) en procurant une rigidité et que l'entretoise transversale de châssis (19) est disposée dans l'intervalle derrière la paroi de séparation (25) qui délimite l'arrière de l'habitacle des passagers (26).

2. Renforcement selon la revendication 1, **caractérisé en ce que** l'entretoise transversale de châssis (19) présente un profil ouvert d'un côté qui est relié avec la plaque porteuse (15) en un profil fermé au moins par section.

3. Renforcement selon la revendication 1, **caractérisé en ce que** la plaque porteuse (15), dans la zone d'ouvertures de point de fixation d'amortisseur (17) est traversée par les points de fixation d'amortisseur (16) et que l'entretoise transversale de châssis (19) est disposée sur le côté supérieur de la plaque porteuse (15).

4. Renforcement selon la revendication 1, **caractérisé en ce que** le côté supérieur de l'entretoise transversale de châssis (19) et des points de fixation d'amortisseur (16) figurent en un plan qui, de préférence, s'étend sensiblement à la hauteur de l'extrémité inférieure d'une lunette arrière de véhicule automobile.

5. Renforcement selon la revendication 1, **caractérisé en ce que** l'entretoise transversale de châssis (19) est prolongée par l'intermédiaire de patins d'appui (29) en ses extrémités dirigées vers le point de fixation d'amortisseur (16).

6. Renforcement selon la revendication 1, **caractérisé en ce que** deux renforts d'angle (36) inférieurs sont associés aux extrémités de l'entretoise transversale de châssis (19), séparés par la plaque porteuse (15), qui sont reliés de manière fixe avec la plaque porteuse (15) et, chaque fois, l'un des passages de roue (11) ou points de fixation d'amortisseur (16).

7. Renforcement selon la revendication 1, **caractérisé en ce que** l'entretoise transversale de châssis (19) est prolongée par deux entretoises latérales (20) jusqu'aux parois latérales (12) qui sont fixées entre la paroi latérale (12) respective et le passage de roue (11) ou point de fixation d'amortisseur (16) associé.

8. Renforcement selon la revendication 7, **caractérisé en ce que** le profil des entretoises latérales (20) est élargi en leur extrémité dirigée vers le point de fixation d'amortisseur (16).

9. Renforcement selon la revendication 7, **caractérisé en ce que** la plaque porteuse (15) présente des creux (42) s'étendant latéralement à partir d'ouvertures de point de fixation d'amortisseur (17) qui sont adaptés aux entretoises latérales (20).

10. Renforcement selon la revendication 9, **caractérisé en ce que** les entretoises latérales (20) présentent dans la zone des creux (42) des consoles (35) pour relier la plaque porteuse (15) aux entretoises latérales (20).

11. Renforcement selon la revendication 1, **caractérisé en ce que** les points de fixation d'amortisseur (16) ont une forme approximativement en tronc de cône ou cylindrique au moins dans la zone de leur extrémité supérieure (18).

12. Renforcement selon la revendication 1, **caractérisé en ce que** la plaque porteuse (15) est délimitée par un profilé porteur (23, 24) avant et arrière participant au support.
